# EUROPÄISCHE PATENTSCHRIFT

(11) **EP 2 984 371 B1**
(45) Veröffentlichungstag und Bekanntmachung des Hinweises auf die Patenterteilung: **17.05.2017**
(21) Anmeldenummer: 14715954.5
(22) Anmeldetag: 09.04.2014
(51) Int. Cl.: F16J 9/20

(54) **KOLBENRING MIT PERIODISCH VARIIERENDEN ATTRIBUTEN**
PISTON RING HAVING VARYING ATTRIBUTES
SEGMENT DE PISTON DOTÉ D'ATTRIBUTS À VARIATION PÉRIODIQUE

(30) Priorität: 11.04.2013 DE 102013206399
(43) Veröffentlichungstag der Anmeldung: 17.02.2016
(73) Patentinhaber: Federal-Mogul Friedberg GmbH, 86316 Friedberg (DE)
(72) Erfinder: MAHL, Markus, 86453 Dasing/Taiting (DE); LAUMEYER, Reinhard, 86356 Neusäß (DE); RIEDL, Johann, 86316 Friedberg (DE); NATHEM, Frank, 86415 Mering (DE)
(74) Vertreter: Becker Kurig Straus
(86) Internationale Anmeldenummer: PCT/EP2014/057154
(87) Internationale Veröffentlichungsnummer: WO 2014/166997

(56) Entgegenhaltungen:
- DE-C- 871 390
- FR-A- 1 064 856
- JP-A- S62 200 044
- US-A- 1 755 402
- US-A- 3 851 889

## Beschreibung

Die vorliegende Erfindung betrifft einen Kolbenring mit periodisch variierenden Attributen, insbesondere einen Kolbenring mit periodisch variierender Laufflächenbreite bzw. Tragspiegelbreite, variierendem Winkel zwischen Lauffläche und Flanke, oder variierendem Radius des Laufflächenprofils, für einen Verbrennungsmotor oder Kompressor.

Moderne, großvolumige Motoren für Schiffe sind in der Regel Zweitakt-Dieselmotore, da diese Motore so konstruiert werden können, dass deren Drehzahl typischerweise in einem Bereich von ungefähr 50 U/min bis zu 250 U/min (typischerweise unter 100 U/min) liegt und deren Leistung je nach Zahl der Zylinder bis zu ungefähr 100 MW erreichen kann. Derartige großvolumige, langsam laufende Zweitakt-Schiffmotore wirken bevorzugt unmittelbar auf die Antriebswelle(n) des/der Propeller(s), da aufgrund ihrer Drehzahl auf ein Untersetzungsgetriebe zur Drehzahlreduzierung verzichtet werden kann.

Typischerweise haben derartige großvolumige Zweitakt-Motoren zwei getrennte Ölkreisläufe, einen für die Motorschmierung und einen für die Zylinderschmierung. Die Zylinderschmierung stellt sicher, dass zu einem geeigneten Zeitpunkt genug Schmieröl zur Verfügung gestellt wird, um eine ausreichende Schmierung der Zylinderoberflächen bzw. der Kolbenringe zu gewährleisten.

Das Zylinderschmieröl wird, abhängig von der Last der Maschine, durch die Laufbuchse in den Kolbenraum eingespritzt. Auf diesem Schmierfilm laufen die Kolbenringe bzw. deren Lauffläche. Im motorischen Betrieb bildet sich zwischen der Lauffläche und der Laufbuchse ein schmaler Ölfilm aus, der so genannte Tragspiegel. Dabei kommt es unter anderem darauf an, so wenig Schmieröl wie möglich einzuspritzen, um Kosten zu sparen und eine Überschmierung zu verhindern. Die Zylinderschmierung erfolgt beispielsweise im oberen Hub-Drittel, indem Schmieröl durch eine Schmierölpumpe durch Schmieröleinlässe, die beispielsweise in einer Ebene in der Zylinderwand vorgesehen sind, dem Zylinder zugeführt wird, so dass die Schmierung des Kolbens und des Kolbenringes möglichst optimal gewährleistet wird. Die Ölzufuhr in die Zylinder erfolgt üblicherweise im Gasgegendruckverfahren.

Beispielsweise kann ein Schmieröleinspritzsystem eingesetzt werden, das Schmieröl genau dosiert über Düsen in die Zylinder einspritzt. Eine computergesteuerte Anlage registriert, in welcher Position sich ein Kolben befindet, und führt dann gezielt Schmieröl zu. Dies geschieht mit hohem Druck, so dass das Schmieröl sehr fein versprüht wird, um eine möglichst gleichmäßige Benetzung der Zylinderlaufbuchse zu erhalten, gezielt dort, wo sich die Kolbenringe befinden und wo die Reibung tatsächlich stattfindet.

Berücksichtigt man, dass moderne, großvolumige Zweitakt-Schiffmotoren mit einer Drehzahl von ungefähr 50 U/min bis zu 250 U/min bei einem Hub von bis zu 2500 mm betrieben werden, ist die Zeitspanne, die für die Zufuhr des Schmieröls und die Verteilung des zugeführten Schmieröls zur Verfügung steht, gering bemessen und stellt große Herausforderungen an die Sicherstellung der Qualität der Schmierung. Nimmt man beispielsweise an, dass ein Zylinder einen (Innen-) Durchmesser von 900 mm aufweist und 8 über den Umfang gleich verteilte Zugänge für die Ölzufuhr in der Zylinderwand vorgesehen sind, muss sich das zugeführte Schmieröl ausgehend von den jeweiligen Zugängen in der bereitgestellten Zeitspanne über eine Länge von ca. 350 mm in Umfangsrichtung des Kolbenrings verteilen.

Es zeigt sich, dass bei konventioneller Gestaltung des einen oder der mehreren Kolbenringe aufgrund fehlender Druckgradienten in Umfangsrichtung keine bzw. lediglich eine sehr geringe Verteilung bzw. Bewegung (maximal ca. 3%) des Schmieröls in Umfangsrichtung bzw. tangentialer Richtung erhalten wird. Hingegen bewegt sich das Schmieröl hauptsächlich (ca. 97%) in Laufrichtung bzw. axialer Richtung der Kolbenrings.

Einsatzgebiet der vorliegenden Erfindung sind Verbrennungsmotoren und Kolbenverdichter allgemein, auch außerhalb des Schiffseinsatzes. Ein ähnlicher Kolbenring ist aus US 3 851 889 A bekannt. Aufgabe der vorliegenden Erfindung ist es, einen Kolbenring bereitzustellen, der durch verbesserte Verteilung des Schmieröls auch in Umfangsrichtung für ausreichende Schmierverhältnisse sorgt, und der sowohl einen niedrigen Ölverbrauch und geringeren Leckgasdurchlass (Blow-By) gewährleistet als auch günstig herstellbar ist.

Gemäß einem ersten Aspekt der Erfindung wird ein Kolbenring mit einer außenseitigen Umfangsfläche, einer innenseitigen Umfangsfläche und zwei Flanken bereitgestellt, wobei die Umfangsfläche eine ballige Profilierung aufweist, und wobei
- die ballige Profilierung einen im Wesentlichen ebenen Scheitelpunktsbereich aufweist, der die Lauffläche des Kolbenrings definiert, und wobei die axiale Breite der Lauffläche über den Umfang des Kolbenrings periodisch variiert; und/oder
- die ballige Profilierung einen im Wesentlichen ebenen Scheitelpunktsbereich aufweist, der die Lauffläche des Kolbenrings definiert, und wobei der Winkel zwischen der Lauffläche und zumindest einer Flanke über den Umfang des Kolbenrings periodisch variiert; und/oder
- wobei der Radius der balligen Profilierung über den Umfang des Kolbenrings periodisch variiert.

Erfindungsgemäß wird ein neuartiges Laufflächenprofil für einen Kolbenring vorgeschlagen. Die Lauffläche des Kolbenringes weist eine im Wesentlichen konvex ballig ausgebildete Profilierung mit einem Scheitelpunktsbereich auf. Im Bereich des Scheitelpunkts liegt im Betrieb der Kolbenring an der Laufbuchse an, d.h. der Scheitelpunktsbereich definiert die Lauffläche des Kolbenrings. Erfindungsgemäß variiert eines oder variieren mehrere der Attribute "axiale Breite der Lauffläche", "Winkel zwischen der Lauffläche und zumindest einer Flanke" und "Radius der balligen Profilierung".

In einer ersten Alternative variiert die axiale Breite dieser Lauffläche in Umfangsrichtung, mit anderen Worten die axiale Breite der Lauffläche variiert in Abhängigkeit von der

Winkelposition entlang des Umfangs. Mit der variablen Breite der Lauffläche variiert in gleicher Weise der sich im Betrieb zwischen Lauffläche und Laufbuchse ausbildende Tragspiegel des Schmieröls.

In einer zweiten Alternative variiert der Winkel zwischen der Lauffläche und zumindest einer Flanke über den Umfang des Kolbenrings. Mit anderen Worten, die Fläche zwischen Lauffläche und Flanke(n) fällt unterschiedlich steil in Richtung der Flanke ab.

In einer dritten Alternative variiert der Radius der balligen Profilierung über den Umfang des Kolbenrings. Es soll angemerkt werden, dass es bei dieser Ausführungsform nicht zwingend nötig ist, dass eine im Wesentlichen ebene Lauffläche vorhanden ist. Die Ausbildung eines breiteren bzw. schmaleren Tragspiegels kann hier auch durch den größeren bzw. kleineren Winkel der balligen Profilierung allein erzielt werden. Bei einer ebenfalls möglichen Variante mit einem im Wesentlichen ebenen Scheitelpunktsbereich bezieht sich der Radius auf eine fiktive Profilierung ohne den Scheitelpunktsbereich (d.h. auf eine fiktive Profilierung ohne den Scheitelpunktsbereich).

Diese Alternativen können auch beliebig kombiniert werden.

Eine derart gestaltete Lauffläche des Kolbenringes bewirkt somit, dass sich im laufenden Betrieb aufgrund der variablen Tragspiegelbreite bzw. des variablen Winkels bzw. des variablen Radius' hydrodynamische Drücke in der Umlaufrichtung aufbauen. Diese hydrodynamischen Drücke führen zu Druckgradienten, die Schmierölflüsse veranlassen und eine Umverteilung des Schmieröls in Umfangsrichtung bzw. tangentialer Richtung bewirken. Die hydrodynamisch bewirkte Umverteilung des Schmieröls führt zu einer Reduzierung der erforderlichen Zufuhrmenge und einer gleichmäßigeren und schnelleren Verteilung in Umfangsrichtung des zugeführten oder eingespritzten Schmieröls.

Gemäß einer Ausführungsform variiert die axiale Position der Mitte der Lauffläche periodisch. Dadurch kann die Ausbildung von Druckgradienten verstärkt werden.
Gemäß einer Ausführungsform umfasst die Variation der Breite und/oder der Position der Mitte der Lauffläche mindestens eine volle Periode. Bevorzugt beträgt die Anzahl der vollen Perioden zwischen 4 und 34. Die Zahl der Perioden kann an die Zahl der Durchlasszugänge bzw. Düsen angepasst werden, durch die das Schmieröl beispielsweise im Gasgegendruckverfahren in den Zylinder eingedrückt bzw. eingespritzt wird. So kann beispielsweise die Zahl der Perioden gleich der Zahl der Durchlasszugänge bzw. Düsen oder aber auch ein ganzzahliges Vielfaches davon sein.

Gemäß einer Ausführungsform ist die Variation der Breite und/oder der Position der Mitte der Lauffläche und/oder die Variation des Winkels zwischen der Lauffläche und der zumindest einen Flanke und/oder die Variation des Radius des Laufflächenprofils in Bezug auf den Ringstoß des Kolbenrings symmetrisch.

Gemäß einer alternativen Ausführungsform ist
- die Variation der Breite und/oder der Position der Mitte der Lauffläche in Bezug auf den Ringstoß des Kolbenrings asymmetrisch;
und/oder
- die Variation des Winkels zwischen der Lauffläche und der zumindest einen Flanke in Bezug auf den Ringstoß des Kolbenrings asymmetrisch;
und/oder
- die Variation des Radius der balligen Profilierung in Bezug auf den Ringstoß des Kolbenrings asymmetrisch;
und/oder
- der Verlauf der Variation der Breite und/oder der Position der Mitte der Lauffläche, betrachtet in Umfangsrichtung des Kolbenrings, pro Umlaufrichtung unterschiedlich;
und/oder
- der Verlauf der Variation des Winkels zwischen der Lauffläche und der zumindest einen Flanke, betrachtet in Umfangsrichtung des Kolbenrings, pro Umlaufrichtung unterschiedlich;
und/oder
- der Verlauf der Variation des Radius' der balligen Profilierung, betrachtet in Umfangsrichtung des Kolbenrings, pro Umlaufrichtung unterschiedlich.

Insbesondere durch die Variante des pro Umlaufrichtung unterschiedlichen Verlaufs können die Druckgradienten mit einer Art "Laufrichtungsbindung" erzeugt werden, bzw. der durch hydrodynamische Drücke und Druckunterschiede erzeugte Schmierölfluss kann damit gezielt so erzeugt werden, dass in der einen Umlaufrichtung mehr Öl fließt/das Öl schneller fließt als in der entgegengesetzten Umlaufrichtung. Beispielsweise könnte dies durch eine etwa Sägezahn-artige Variation erreicht werden, deren steigende bzw. fallende Flanken in dem einen Umlaufsinn stärker ansteigen/abfallen als in dem entgegengesetzten Umlaufsinn.

Dadurch wirken auf den Kolbenring umgekehrt Kräfte in der durch diese Vorzugsrichtung der variablen Laufflächenbreite/Mittenposition definierten Rotationsrichtung. Dadurch kann, wenn gewünscht, eine Drehung des Kolbenrings so angeregt werden, um ein Festsetzen zu verhindern und den Verschleiß gleichmäßiger zu gestalten.

Gemäß einer Ausführungsform verläuft ein Rand der Lauffläche parallel zur benachbarten Flanke. Somit erfolgt die Variation der Laufflächenbreite derart, dass nur an dem anderen Rand der Lauffläche die hydrodynamischen Drücke bzw. Druckgradienten auftreten. Dadurch kann erreicht werden, dass gezielt nur auf dieser Seite - beispielsweise der dem Brennraum abgewandten Seite - des Kolbenrings Schmierölflüsse angeregt werden.

Gemäß einer Ausführungsform weisen beide Ränder der Lauffläche jeweils Scheitelpunkte auf, an denen die axiale Entfernung zur benachbarten Flanke ein Minimum aufweist, und wobei die Scheitelpunkte in Umfangsrichtung abwechselnd an jeweils einem der gegenüberliegenden Ränder der Lauffläche angeordnet sind. Diese Scheitelpunkte können eine abgerundete Form aufweisen, bevorzugt können aber auch relativ spitze Scheitelpunkte vorgesehen werden, um lokal verstärkt Druckgradienten zu erzeugen. Dies bietet sich insbesondere dort an, wo Zufuhrstellen bzw. Einspritzstellen für das Schmieröl angeordnet sind, um das Öl von dort möglichst schnell zu verteilen.

Gemäß einer Ausführungsform weist die axiale Breite an den Scheitelpunkten ein Maximum auf.

Gemäß einer Ausführungsform beträgt die minimale axiale Breite der Lauffläche 20% der maximalen Breite.

Gemäß einer Ausführungsform beträgt die axiale Breite der Lauffläche zwischen 0,1 und 3 cm, bevorzugt zwischen 0,2 und 1,5 cm.

Gemäß einer Ausführungsform beträgt die axiale Breite der Lauffläche 5% bis 50% der axialen Breite des Kolbenrings.

Gemäß einer Ausführungsform ist die Variation der Breite oder die Variation des Winkels oder die Variation des Radius eine Variation, deren steigende bzw. fallende Flanken in dem einen Umlaufsinn stärker ansteigen/abfallen als in dem entgegengesetzten Umlaufsinn, bezogen auf den Ringstoß. Dies kann beispielsweise eine Sägezahn-artige Variation sein.

Durch die je nach Umlaufrichtung unterschiedliche Variation wird ein Öltransport in Umlaufrichtung erzielt. Bei Variation der Breite erfolgt der Öltransport in der Richtung, in welcher die Breite zunimmt. Bei der Variation des Winkels erfolgt der Öltransport in der Richtung, in welcher der Winkel ansteigt.

### Kurze Beschreibung der Zeichnung

Die Erfindung wird nachfolgend anhand der in den Figuren dargestellten Ausführungsbeispiele näher erläutert, wobei
- Fig. 1: eine radiale Aufsicht auf einen Teil der äußeren Umfangsfläche einer ersten Ausführungsform eines erfindungsgemäßen Kolbenrings zeigt;
- Fig. 2: drei verschiedene Querschnittsansichten durch einen Kolbenring nach Fig. 1 zeigt;
- Fig. 3: einen Kolbenring nach Fig. 1 und 2 in axialer Aufsicht zeigt;
- Fig. 4: eine radiale Aufsicht auf einen Teil der äußeren Umfangsfläche einer zweiten Ausführungsform eines erfindungsgemäßen Kolbenrings zeigt;
- Fig. 5: zwei verschiedene Querschnittsansichten durch einen Kolbenring nach Fig. 4 zeigt;
- Fig. 6: einen Kolbenring nach Fig. 4 und 5 in axialer Aufsicht zeigt;
- Fig. 7: eine radiale Aufsicht auf einen Teil der äußeren Umfangsfläche einer dritten Ausführungsform eines erfindungsgemäßen Kolbenrings zeigt;
- Fig. 8: zwei verschiedene Querschnittsansichten durch einen Kolbenring nach Fig. 7 zeigt; und
- Fig. 9: einen Kolbenring nach Fig. 7 und 8 in axialer Aufsicht zeigt;
- Fig. 10: zwei verschiedene Querschnittsansichten durch einen Kolbenring nach einer vierten Ausführungsform zeigt;
- Fig. 11: eine radiale Aufsicht auf einen Kolbenring nach Fig. 10 zeigt;
- Fig. 12: zwei verschiedene Querschnittsansichten durch einen Kolbenring nach einer fünften Ausführungsform zeigt;
- Fig. 13: eine radiale Aufsicht auf einen Kolbenring nach Fig. 12 zeigt;
- Fig. 14: eine radiale Aufsicht auf einen Kolbenring nach einer sechsten Ausführungsform zeigt;
- Fig. 15: eine radiale Aufsicht auf einen Kolbenring nach einer siebten Ausführungsform zeigt;
- Fig. 16: eine radiale Aufsicht auf einen Kolbenring nach einer achten Ausführungsform zeigt;
- Fig. 17: eine radiale Aufsicht auf einen Kolbenring nach einer neunten Ausführungsform zeigt;
- Fig. 18: zwei verschiedene Querschnittsansichten durch einen Kolbenring nach einer zehnten Ausführungsform zeigt; und
- Fig. 19: eine radiale Aufsicht auf den Kolbenring von Fig. 18 ist.

### Detaillierte Beschreibung

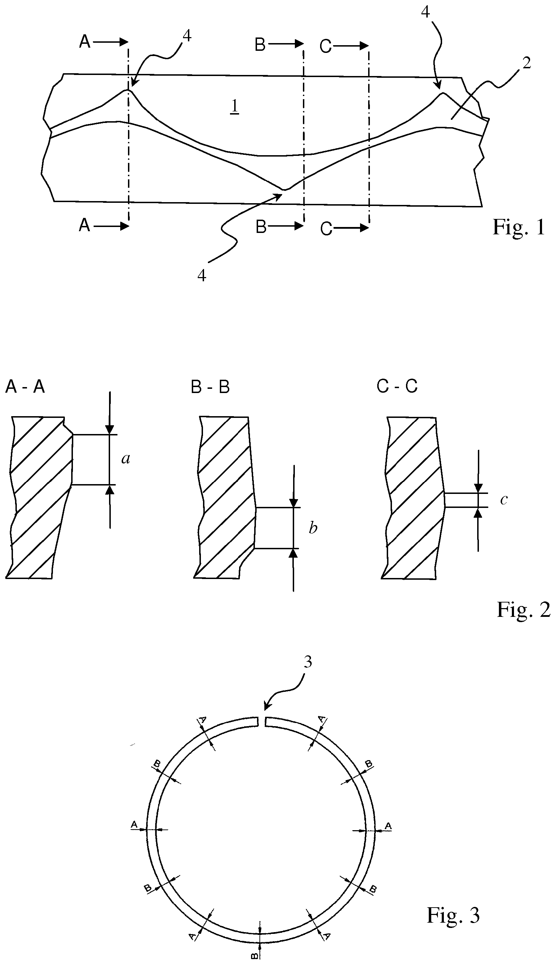

Figur 1 zeigt eine Aufsicht auf die Laufflächenseite einer ersten Ausführungsform eines erfindungsgemäßen Kolbenrings 1. Der Kolbenring 1 weist eine Profilierung auf, die einen im Wesentlichen ebenen Scheitelpunktsbereich aufweist, durch den die eigentliche Lauffläche 2 des Kolbenrings 1 definiert wird. Die Lauffläche 2 stellt im Betrieb die Kontaktfläche zu der Zylinderlaufbuchse oder der Zylinderinnenseite dar. Auf der Lauffläche 2 wird sich im geschmierten Zustand im Betrieb ein Ölfilm aufbauen, der so genannte Tragspiegel.

Durch die Hin- und Herbewegung des Kolbens wird das Schmieröl im Wesentlichen nur in axialer Richtung, d.h. in der Figur nach oben bzw. unten, bewegt und verteilt sowie abgestreift. Bei herkömmlichen Kolbenringen erfolgt allenfalls eine extrem geringfügige Verteilung (maximal 3%) der Schmierölmenge in tangialer Richtung, d.h. in Umfangsrichtung des Kolbenrings. Um bei herkömmlichen Kolbenringen, etwa den Großkolbenringen von Schiffsmotoren, dennoch eine ausreichende Schmierung zu erhalten, muss dazu einerseits eine relativ große Ölmenge eingespritzt bzw. zugeführt werden, und andererseits muss das Schmieröl an mehreren Stellen verteilt über den Umfang des Kolbenrings bereitgestellt werden.

Um eine stärkere und beschleunigte Verteilung des Schmieröls zu erhalten und dadurch auch die benötigte Zufuhrmenge zu reduzieren, schlägt die Erfindung vor, die eigentliche Lauffläche in ihrer Breite über den Umfang des Kolbenrings variabel auszugestalten. Wie in Figur 1 dargestellt, weist die axiale Breite (bzw. Höhe) der Lauffläche 2 (bzw. des im Wesentlichen ebenen Bereichs, der diese bildet) an periodisch verteilten Stellen Maxima auf, beispielsweise an der Stelle des Querschnitts A-A und links neben der Stelle des Querschnitts B-B. Zwischen den periodisch verteilten Stellen mit maximaler Breite liegen Bereiche der Lauffläche 2 mit minimaler Breite, wie beispielsweise an der Stelle des Querschnitts C-C.

Durch die variable Breite der Lauffläche 2 werden hydrodynamische Drücke und Druckgradienten in dem Ölfilm erzeugt, die für einen erhöhten und beschleunigten Transport des Öls in Umfangsrichtung des Kolbenrings 1 sorgen. In dem gezeigten Ausführungsbeispiel weisen die Stellen maximaler Breite nahezu spitz zulaufende Scheitelpunkte 4 auf, um diesen Effekt insbesondere an den Stellen der Scheitelpunkte 4 zu verstärken. In dem gezeigten Ausführungsbeispiel ist auch zu erkennen, dass der Mittelpunkt in axialer Richtung der Lauffläche 2 ebenfalls mit der Breite periodisch variiert. Auch dies sorgt dafür, dass der Öltransport in Umfangsrichtung angeregt wird. Alternativ ist es jedoch auch möglich (nicht gezeigt), dass lediglich die Breite variiert, der Mittelpunkt des Lauffläche aber an einer konstanten (mittigen oder außermittigen) Position relativ zu den Flanken über den Umfang des Kolbenrings angeordnet ist.

In Figur 2 sind Querschnittsansichten durch die entsprechenden Stellen des Kolbenrings aus Figur 1 gezeigt. Es kann hier leicht ersehen werden, dass einerseits der Mittelpunkt der Lauffläche relativ zu den Flanken variabel ist, im Schnitt A-A weiter oben, im Schnitt B-B weiter unten und im Schnitt C-C mittig. Weiterhin ist die variable Breite zu ersehen, wobei die Breite *a* der Lauffläche von Schnitt A-A am größten ist, die Breite *b* von Schnitt B-B geringfügig kleiner, und die Breite c von Schnitt C-C am kleinsten ist.

In Figur 3 schließlich ist die Ausführungsform von Figur 1 und 2 in einer axialen Aufsicht dargestellt. Die periodische Verteilung der Variation in der Breite der Lauffläche gemäß den Schnitten A und B ist zu ersehen, außerdem ist die periodische Variation symmetrisch zum Stoß 3 des Kolbenrings gestaltet. Alternativ ist es jedoch auch möglich (nicht gezeigt), dass die periodische Variation asymmetrisch zum Stoß 3 des Kolbenrings gestaltet ist. Die Anzahl der vollen Perioden beträgt in diesem Beispiel 5.

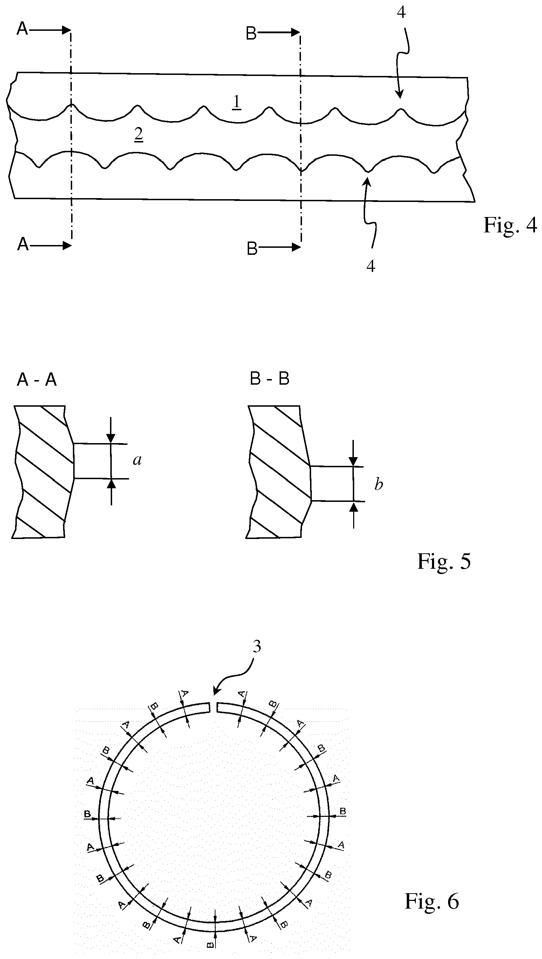

Figur 4 zeigt eine Aufsicht auf die Laufflächenseite einer zweiten Ausführungsform eines erfindungsgemäßen Kolbenrings 1. Auch bei dieser Ausführungsform weist die Lauffläche 2 des Kolbenrings 1 nahezu spitz zulaufende Scheitelpunkte 4 auf. Die relative Variation der Breite der Lauffläche 2 ist geringer als bei der Ausführungsform von Figur 1-3, allerdings befinden sich die Minima der Breite auch hier zwischen zwei benachbarten Scheitelpunkten auf verschiedenen Rändern der Lauffläche 2. Die Scheitelpunkte 4 des oberen bzw. unteren Randes sind in diesem Beispiel um etwa ¼ Periode gegeneinander versetzt. Andere Phasenversatzwerte (nicht gezeigt) sind ebenfalls möglich. Bei einem Phasenversatz von 0 kann erreicht werden, dass der Mittelpunkt fix, die Breite aber weiter variabel über den Umfang ist.

Figur 5 zeigt Querschnitte entsprechend der Figur 4. Die Breite a von Schnitt A-A ist im gezeigten Beispiel gleich groß wie die Breite b von Schnitt B-B, sie kann aber auch unterschiedlich sein. Im Querschnitt ist auch hier zu ersehen, dass die Position des Mittelpunkts der Lauffläche 2 gegenüber den Flanken über den Umfang des Kolbenrings variabel ist.

In Figur 6 schließlich ist die Ausführungsform von Figur 4 und 5 in einer axialen Aufsicht dargestellt. Die periodische Verteilung der Variation in der Breite der Lauffläche gemäß den Schnitten A und B ist zu ersehen, außerdem ist die periodische Variation symmetrisch zum Stoß 3 des Kolbenrings gestaltet. Alternativ ist es jedoch auch möglich (nicht gezeigt), dass die periodische Variation asymmetrisch zum Stoß 3 des Kolbenrings gestaltet ist, etwa mit einem entsprechenden Versatz, beispielsweise um eine halbe Periode. Die Anzahl der vollen Perioden beträgt in diesem Beispiel 33.

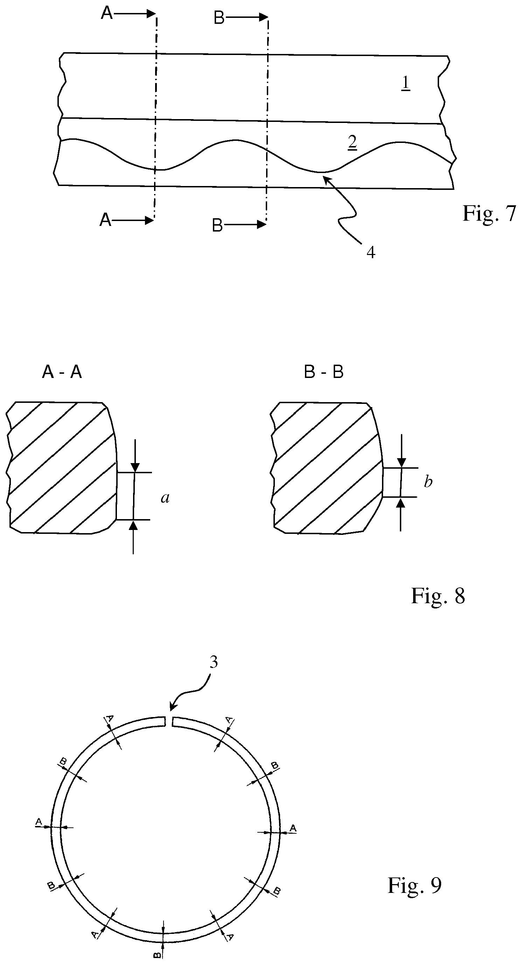

Figur 7 zeigt eine Aufsicht auf die Laufflächenseite einer dritten Ausführungsform eines erfindungsgemäßen Kolbenrings 1. Bei dieser Ausführungsform weist die Lauffläche 2 des Kolbenrings 1 gerundete Scheitelpunkte 4 auf, die einem sinusartigen Verlauf folgen. Die Scheitelpunkte 4 befinden sich nur auf einem - hier dem unteren - Rand der Lauffläche 2, wohingegen in diesem Beispiel der andere - hier obere - Rand parallel zur Flanke des Kolbenrings 1 verläuft. Dadurch können gezielt nur auf einer Seite die hydrodynamischen Drücke und Druckgradienten erzeugt werden, um so selektiv nur auf dieser Seite den Öltransport in Umfangsrichtung zu beeinflussen. Bevorzugt wird dies auf der vom Brennraum abgewandten Seite des Kolbenrings eingesetzt, d.h. der parallele Rand der Lauffläche ist dem Brennraum zugewandt. Alternativ ist aber auch der umgekehrte Fall möglich (nicht gezeigt).

Figur 8 zeigt Querschnitte entsprechend der Figur 7. Die Breite a von Schnitt A-A ist größer als die Breite b von Schnitt B-B. Im Querschnitt ist auch hier zu ersehen, dass die Position des Mittelpunkts der Lauffläche 2 gegenüber den Flanken über den Umfang des Kolbenrings variabel ist. Alternativ ist es jedoch auch möglich (nicht gezeigt), dass nur die Breite über den Umfang variabel ist, der Mittelpunkt aber gegenüber den Flanken fest angeordnet ist.

In Figur 9 schließlich ist die Ausführungsform von Figur 7 und 8 in einer axialen Aufsicht dargestellt. Die periodische Verteilung der Variation in der Breite der Lauffläche gemäß den Schnitten A und B ist zu ersehen, außerdem ist die periodische Variation symmetrisch zum Stoß 3 des Kolbenrings gestaltet. Alternativ ist es jedoch auch möglich (nicht gezeigt), dass die periodische Variation asymmetrisch zum Stoß 3 des Kolbenrings gestaltet ist, etwa mit einem entsprechenden Versatz, beispielsweise um eine halbe Periode. Die Anzahl der vollen Perioden beträgt in diesem Beispiel 5. Andere Anzahlen von Perioden sind aber ebenfalls möglich, auch kann die Anzahl der Perioden sowohl gerade als auch ungerade sein.

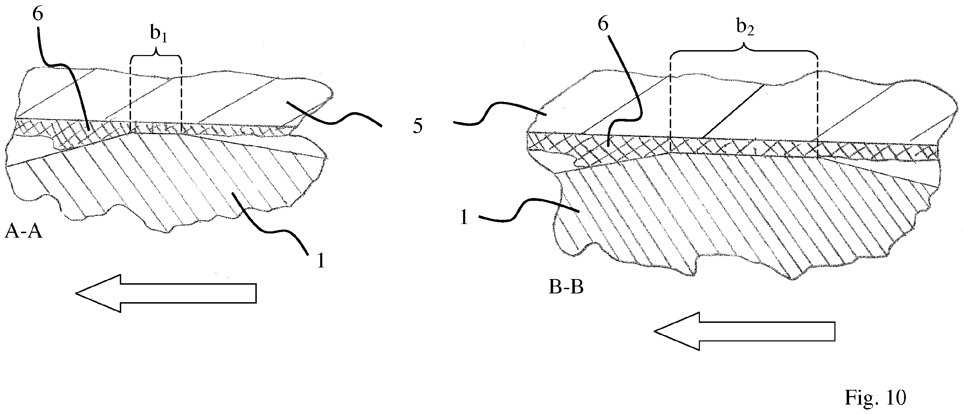

Fig. 10 zeigt zwei Querschnittsansichten durch einen Kolbenring gemäß einer Ausführungsform, bei der die Lauffläche bzw. der Tragspiegel in der Breite variiert. Der Querschnitt A-A zeigt eine geringere Breite b₁, wohingegen der Querschnitt B-B eine größere Breite b₂ zeigt. Die Laufrichtung des Kolbenrings 1 ist jeweils mit einem Pfeil angedeutet (bei feststehender Laufbuchse bzw. Zylinderwand 5). An den in Bewegungsrichtung vorderen Abschnitten der Lauffläche bildet sich ein Ölfilm 6 mit erhöhter Dicke aus.

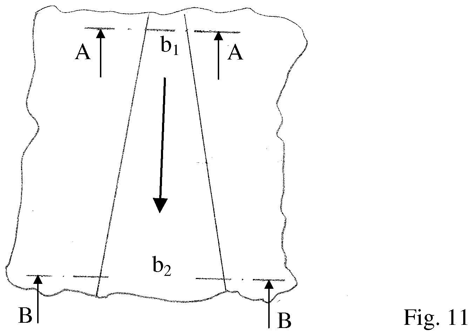

Fig. 11 zeigt eine radiale Aufsicht auf die Ausführungsform von Fig. 10. Hier ist beispielhaft ein im Wesentlichen linearer Verlauf der Laufflächen- bzw. Tragspiegelbreite gezeigt, wobei auch andere nicht-lineare Verläufe möglich sind, etwa wie in den vorstehenden Ausführungsformen. Der Öltransport (angedeutet durch einen Pfeil) erfolgt bei dieser Konfiguration von der Stelle der kleinere Breite b₁ in Richtung zur Stelle der größeren Breite b₂. Sofern diese Variation der Breite in Sägezahn-artiger Weise je nach Umlaufrichtung um den Kolbenring asymmetrisch ist, kann dadurch in Summe ein Öltransport in Richtung der größeren Breite erzielt werden.

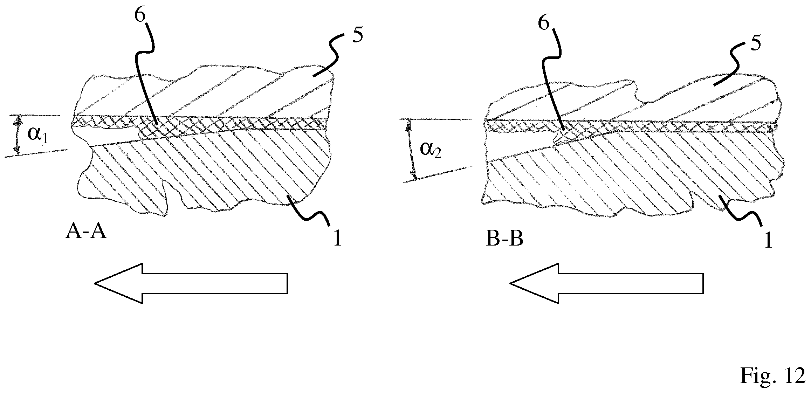

Fig. 12 zeigt zwei Querschnittsansichten durch einen Kolbenring gemäß einer Ausführungsform, bei der der Winkel zwischen Lauffläche bzw. Tragspiegel und einer (hier der in Bewegungsrichtung des Kolbenrings vorderen) Flanke variiert. Der Querschnitt A-A zeigt einen kleineren Winkel α₁, wohingegen der Querschnitt B-B einen größeren Winkel α₂ zeigt. Die Laufrichtung des Kolbenrings 1 ist jeweils mit einem Pfeil angedeutet (bei feststehender Laufbuchse bzw. Zylinderwand 5). An den in Bewegungsrichtung vorderen Abschnitten der Lauffläche bildet sich ein Ölfilm 6 mit erhöhter Dicke aus.

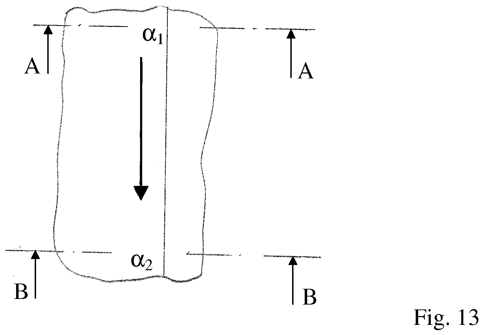

Fig. 13 zeigt eine radiale Aufsicht auf die Ausführungsform von Fig. 12. Hier ist beispielhaft ein im Wesentlichen linearer Verlauf des Winkels zwischen Lauffläche bzw. Tragspiegel gezeigt, wobei auch andere nicht-lineare Verläufe möglich sind, etwa wie in den vorstehenden Ausführungsformen. Der Öltransport (angedeutet durch einen Pfeil) erfolgt bei dieser Konfiguration von der Stelle des kleineren Winkels α₁ in Richtung zur Stelle der größeren Winkels α₂. Sofern diese Variation des Winkels in Sägezahn-artiger Weise je nach Umlaufrichtung um den Kolbenring asymmetrisch ist, kann dadurch in Summe ein Öltransport in Richtung des größeren Winkels erzielt werden. In jedem Fall wird allein bedingt durch die Winkelunterschiede ein Öltransport in Richtung des größeren Winkels angeregt.

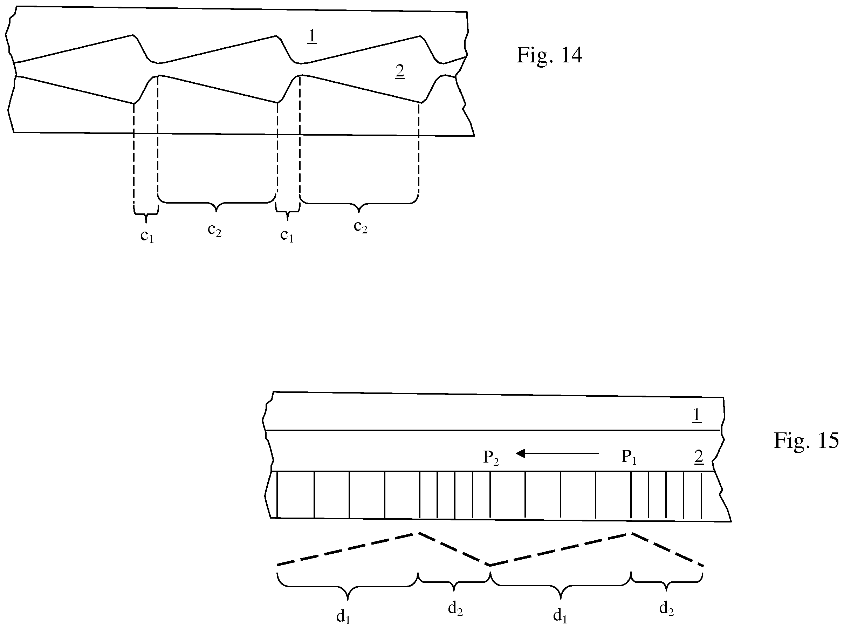

Fig. 14 zeigt in einer radialen Aufsicht, beispielsweise entsprechend der Ausführungsform von Fig. 10, wie ein je Umlaufrichtung um den Kolbenring asymmetrischer Verlauf der Variation der Breite der Lauffläche bzw. des Tragspiegels gemäß einer Ausführungsform der Erfindung aussehen kann. Der Verlauf entspricht hier beispielsweise einer Sägezahnkurve, andere je nach Umlaufrichtung unterschiedlich symmetrische Verläufe sind aber ebenfalls möglich. Die Breite der Lauffläche bzw. des Tragspiegels nimmt in den kürzeren Bereichen c₁ von der maximalen bis hin zur minimalen Breite relativ stark ab (von links nach rechts betrachtet). In den dagegen längeren Bereichen c₂ wiederum nimmt die Breite von der minimalen bis hin zur maximalen Breite relativ schwach zu (ebenfalls von links nach rechts betrachtet). In der entgegengesetzten Betrachtungsrichtung, d.h. von rechts nach links, ist dieser Verlauf genau umgekehrt. Somit wird insgesamt eine pro Umlaufrichtung in sich symmetrische, zwischen den Umlaufrichtungen aber asymmetrische Variation erzielt, die insgesamt einen Öltransport in Umlaufrichtung (im hier gezeigten Beispiel von links nach rechts) bewirkt, wenn der Kolbenring sich bewegt.

Fig. 15 zeigt in einer radialen Aufsicht, beispielsweise entsprechend der Ausführungsform von Fig. 12, wie ein je Umlaufrichtung um den Kolbenring asymmetrischer Verlauf der Variation des Winkels zwischen der Lauffläche bzw. dem Tragspiegel und der Flanke des Kolbenrings gemäß einer Ausführungsform der Erfindung aussehen kann. Der Verlauf entspricht hier beispielsweise einer Sägezahnkurve, andere je nach Umlaufrichtung unterschiedlich symmetrische Verläufe sind aber ebenfalls möglich. Der Winkel der Lauffläche bzw. des Tragspiegels zur Flanke nimmt in den längeren Bereichen d₁ von dem maximalen bis hin zum minimalen Winkel relativ schwach ab (von links nach rechts betrachtet). In den dagegen kürzeren Bereichen d₂ wiederum nimmt der Winkel von dem minimalen bis hin zum maximalen Winkel relativ stark zu (ebenfalls von links nach rechts betrachtet). In der entgegengesetzten Betrachtungsrichtung, d.h. von rechts nach links, ist dieser Verlauf genau umgekehrt. Somit wird insgesamt eine pro Umlaufrichtung in sich symmetrische, zwischen den Umlaufrichtungen aber asymmetrische Variation erzielt, die insgesamt einen Öltransport gegen die Umlaufrichtung (im hier gezeigten Beispiel von rechts nach links) bewirkt, wenn der Kolbenring sich bewegt.

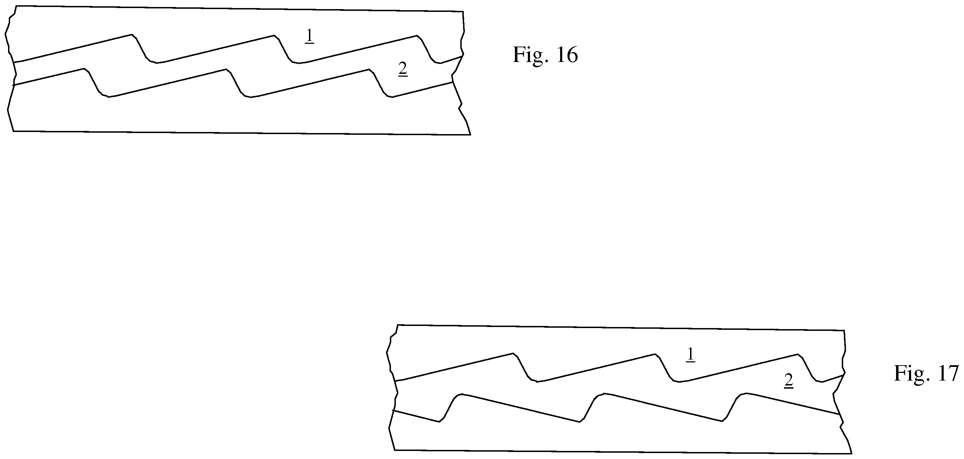

Die Figuren 16 und 17 zeigen weitere alternative Ausgestaltungen von je nach Umlaufrichtung unterschiedlichen Verläufen der Variation der Lauffläche.

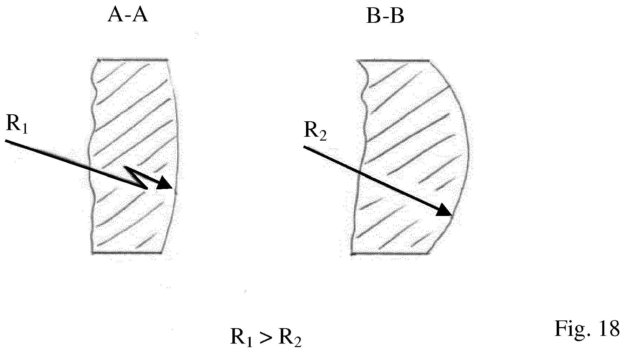

Die Fig. 18 zeigt zwei verschiedene Querschnitte durch eine weitere Ausführungsform eines Kolbenrings gemäß der Erfindung. Auf der linken Seite ist ein Schnitt A-A gezeigt, der eine ballige Profilierung mit einem relativ großen Radius R₁ aufweist. Auf der rechten Seite ist ein Schnitt B-B gezeigt, der eine ballige Profilierung mit einem relativ kleinen Radius R₂ aufweist. Ein kleiner Radius führt zu einer relativ kleinen Auflagefläche an der Zylinderlaufbuchse bzw. -fläche und somit einer relativ kleinen Tragspiegelbreite, wohingegen ein großer Radius zu einer relativ großen Tragspiegelbreite führt.

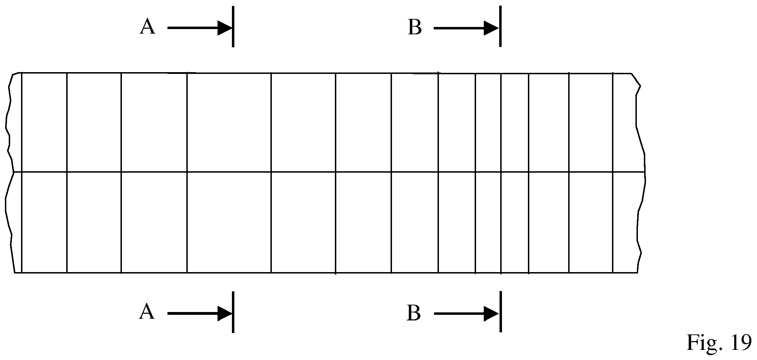

In Fig. 19 ist eine Aufsicht dargestellt, die einen entsprechend der Fig. 18 ausgestalteten Kolbenring zeigt. Im Bereich des Schnitts A ist der Radius der balligen Profilierung größer, im Bereich des Schnitts B hingegen kleiner. Die Scheitelpunktslinie verläuft hier mittig. Durch die senkrechten Striche ist die periodische Variation des Radius der Laufflächenprofilierung angedeutet, wobei große Abstände zwischen den Strichen relativ größere und kleine Abstände relative kleinere Radien bedeuten. Diese Variation weist im Bereich des Schnitts B ein Minimum des Radius und im Bereich A ein Maximum des Radius auf.

Ein gemäß der vorliegenden Erfindung ausgebildeter Kolbenring kann vorzugsweise bei Kolben für Verbrennungsmotoren wie z.B. großvolumigen Zweitakt-Verbrennungsmotoren oder Kompressoren in eine Kolbenringnut eingesetzt werden. Hierbei hat es sich gezeigt, dass einerseits der Ölverbrauch und andererseits der Leckgasdurchlass (Blow-By) gegenüber bekannten Ausführungen erheblich reduziert werden konnte. Es ist daher festzustellen, dass mit einem erfindungsgemäßen Kolbenring ein verbesserter Kolbenring für Kolben eines Verbrennungsmotors oder Kompressors geschaffen wird, der hervorragende Ergebnisse bezüglich Leckgasdurchlass und Ölverbrauch bei sichergestellten Schmierverhältnissen erzielt.

## Patentansprüche

1. Kolbenring (1) mit einer außenseitigen Umfangsfläche, einer innenseitigen Umfangsfläche und zwei Flanken, wobei die Umfangsfläche eine ballige Profilierung aufweist, und wobei
- die ballige Profilierung einen im Wesentlichen ebenen Scheitelpunktsbereich aufweist, der die Lauffläche (2) des Kolbenrings (1) definiert, und wobei die axiale Breite (b₁, b₂) der Lauffläche (2) über den Umfang des Kolbenrings (1) periodisch variiert, wobei der Verlauf der Variation der Breite (b₁, b₂), betrachtet in Umfangsrichtung des Kolbenrings (1), pro Umlaufrichtung unterschiedlich ist; und/oder
- die ballige Profilierung einen im Wesentlichen ebenen Scheitelpunktsbereich aufweist, der die Lauffläche (2) des Kolbenrings (1) definiert, und wobei der Winkel (α₁, α₂) zwischen der Lauffläche (2) und zumindest einer Flanke über den Umfang des Kolbenrings (1) periodisch variiert, wobei der Verlauf der Variation des Winkels (α₁, α₂) zwischen der Lauffläche (2) und der zumindest einen Flanke, betrachtet in Umfangsrichtung des Kolbenrings (1), pro Umlaufrichtung unterschiedlich ist; und/oder
- wobei der Radius (r₁, r₂) der balligen Profilierung über den Umfang des Kolbenrings (1) periodisch variiert, wobei der Verlauf der Variation des Radius (r₁, r₂) der balligen Profilierung, betrachtet in Umfangsrichtung des Kolbenrings (1), pro Umlaufrichtung unterschiedlich ist.

2. Kolbenring (1) nach Anspruch 1, wobei die axiale Position der Mitte der Lauffläche bzw. der balligen Profilierung (2) periodisch variiert, wobei der Verlauf der Variation der Mitte der Lauffläche (2), betrachtet in Umfangsrichtung des Kolbenrings (1), pro Umlaufrichtung unterschiedlich ist.

3. Kolbenring (1) nach Anspruch 1 oder 2, wobei die Variation der Breite (b₁, b₂) und/oder der Position der Mitte der Lauffläche (2) und/oder des Winkels (α₁, α₂) und/oder des Radius (r₁, r₂) mindestens eine volle Periode umfasst.

4. Kolbenring (1) nach einem der Ansprüche 1 bis 3, wobei
- die Variation der Breite (b₁, b₂) und/oder der Position der Mitte der Lauffläche (2) in Bezug auf den Ringstoß (3) des Kolbenrings (1) asymmetrisch ist; und/oder
- die Variation des Winkels (α₁, α₂) zwischen der Lauffläche (2) und der zumindest einen Flanke in Bezug auf den Ringstoß (3) des Kolbenrings (1) asymmetrisch ist; und/oder
- die Variation des Radius (r₁, r₂) der balligen Profilierung in Bezug auf den Ringstoß (3) des Kolbenrings (1) asymmetrisch ist.

5. Kolbenring (1) nach einem der vorhergehenden Ansprüche, wobei ein Rand der Lauffläche (2) parallel zur benachbarten Flanke verläuft.

6. Kolbenring (1) nach einem der Ansprüche 1 bis 4, wobei beide Ränder der Lauffläche (2) jeweils Scheitelpunkte (4) aufweisen, an denen die axiale Entfernung zur benachbarten Flanke ein Minimum aufweist, und wobei die Scheitelpunkte (4) in Umfangsrichtung abwechselnd an jeweils einem der gegenüberliegenden Ränder der Lauffläche (2) angeordnet sind.

7. Kolbenring (1) nach Anspruch 6, wobei die axiale Breite (b₁, b₂) an den Scheitelpunkten (4) ein Maximum aufweist.

8. Kolbenring (1) nach einem der vorhergehenden Ansprüche, wobei die minimale axiale Breite der Lauffläche (2) 20% der maximalen Breite beträgt.

9. Kolbenring (1) nach einem der vorhergehenden Ansprüche, wobei die axiale Breite (b₁, b₂) der Lauffläche (2) zwischen 0,1 und 3 cm, bevorzugt zwischen 0,2 und 1,5 cm beträgt.

10. Kolbenring (1) nach einem der vorhergehenden Ansprüche, wobei die axiale Breite (b₁, b₂) der Lauffläche (2) 5% bis 50% der axialen Breite des Kolbenrings (1) beträgt.

11. Kolbenring (1) nach Anspruch 1, wobei die Variation der Breite (b₁, b₂) oder die Variation des Winkels (α₁, a₂) oder die Variation des Radius (r₁, r₂) eine Variation ist, deren steigende bzw. fallende Flanken in dem einen Umlaufsinn stärker ansteigen/abfallen als in dem entgegengesetzten Umlaufsinn.

## Claims

1. Piston ring (1) having an outside circumferential surface, an inside circumferential surface and two flanks, wherein the circumferential surface has a spherical profiling, and wherein
- the spherical profiling has a substantially flat apex region which defines the bearing surface (2) of the piston ring (1), and wherein the axial width (b₁, b₂) of the bearing surface (2) varies periodically over the circumference of the piston ring (1), wherein the behaviour of the variation of the width (b₁, b₂), when viewed in circumferential direction of the piston ring (1), is different per circumferential direction; and/or
- the spherical profiling has a substantially flat apex region which defines the bearing surface (2) of the piston ring (1), and wherein the angle (α₁, α₂) between the bearing surface (2) and at least one flank varies periodically over the circumference of the piston ring (1), wherein the behaviour of the variation of the angle (α₁, α₂) between the bearing surface (2) and the at least one flank, when viewed in circumferential direction of the piston ring (1), is different per circumferential direction; and/or
- wherein the radius (r₁, r₂) of the spherical profiling varies periodically over the circumference of the piston ring (1), wherein the behaviour of the variation of the radius (r₁, r₂) of the spherical profiling, when viewed in circumferential direction of the piston ring (1), is different per circumferential direction.

2. The piston ring (1) according to claim 1, wherein the axial position of the centre of the bearing surface or the spherical profiling (2) varies periodically, wherein the behaviour of the variation of the centre of the bearing surface (2), when viewed in circumferential direction of the piston ring (1), is different per circumferential direction.

3. The piston ring (1) according to claim 1 or 2, wherein the variation of the width (b₁, b₂) and/or of the position of the centre of the bearing surface (2) and/or of the angle (α₁, α₂) and/or of the radius (r₁, r₂) comprises at least one complete period.

4. The piston ring (1) according to any one of the claims 1 to 3, wherein
- the variation of the width (b₁, b₂) and/or of the position of the centre of the bearing surface (2) is asymmetrical in relation to the ring joint (3) of the piston ring (1); and/or
- the variation of the angle (α₁, α₂) between the bearing surface (2) and the at least one flank is asymmetrical in relation to the ring joint (3) of the piston ring (1); and/or
- the variation of the radius (r₁, r₂) of the spherical profiling is asymmetrical in relation to the ring joint (3) of the piston ring (1).

5. The piston ring (1) according to any one of the preceding claims, wherein an edge of the bearing surface (2) runs parallel to the neighbouring flank.

6. The piston ring (1) according to any one of claims 1 to 4, wherein both edges of the bearing surface (2) each have apexes (4) at which the axial distance to the neighbouring flank has a minimum, and wherein the apexes (4) are disposed in circumferential direction alternately on respectively one of the opposite edges of the bearing surface (2).

7. The piston ring (1) according to claim 6, wherein the axial width (b₁, b₂) has a maximum at the apexes (4).

8. The piston ring (1) according to any one of the preceding claims, wherein the minimum axial width of the bearing surface (2) is 20% of the maximum width.

9. The piston ring (1) according to any one of the preceding claims, wherein the axial width (b₁, b₂) of the bearing surface (2) is between 0.1 and 3 cm, preferably between 0.2 and 1.5 cm.

10. The piston ring (1) according to any one of the preceding claims, wherein the axial width (b₁, b₂) of the bearing surface (2) is 5% to 50% of the axial width of the piston ring (1).

11. The piston ring (1) according to claim 1, wherein the variation of the width (b₁, b₂) or the variation of the angle (α₁, α₂) or the variation of the radius (r₁, r₂) is a variation whose ascending or descending flanks ascend/descend more strongly in one direction of revolution than in the opposite direction of revolution.

## Revendications

1. Segment de piston (1) comportant une surface circonférentielle du côté externe, une surface circonférentielle du côté interne et deux flancs, dans lequel la surface circonférentielle présente un profilage bombé, dans lequel
- le profilage bombé présente une zone de point de sommet essentiellement plate, qui définit la surface de surface de roulement (2) du segment de piston (1), et dans lequel la largeur axiale (b₁, b₂) de la surface de roulement (2) varie périodiquement sur la circonférentielle du segment de piston (1), dans lequel le cours de la variation de la largeur (b₁, b₂), considéré dans la direction circonférentielle du segment de piston (1), est différent par direction circonférentielle ; et/ou
- le profilage bombé présente une zone de point de sommet essentiellement plate, qui définit la surface de roulement (2) du segment de piston (1), et dans lequel l'angle (α₁, α₂) entre la surface de roulement (2) et au moins un flanc sur la circonférence du segment de piston (1) varie périodiquement, dans lequel le cours de la variation de l'angle (α₁, α₂) entre la surface de roulement (2) et au moins un flanc, considéré dans la direction circonférentielle du segment de piston (1), est différent par direction circonférentielle ; et/ou
- dans lequel le rayon (r₁, r₂) du profilage bombé varie périodiquement sur la circonférence du segment de piston (1), dans lequel le cours de la variation du rayon (r₁, r₂) du profilage bombé, considéré dans la direction circonférentielle du segment de piston (1), est différent par direction circonférentielle.

2. Segment de piston (1) selon la revendication 1, dans lequel la position axiale du centre de a surface de roulement, resp. du profilage bombé (2) varie périodiquement, dans lequel le cours de la variation du centre de la surface de roulement (2), considéré dans la direction circonférentielle du segment de piston (1), est différent par direction circonférentielle.

3. Segment de piston (1) selon la revendication 1 ou 2, dans lequel la variation de la largeur (b₁, b₂) et/ou la position du centre de la surface de roulement (2) et/ou l'angle (α₁, α₂) et/ou le rayon (r₁, r₂) comprend au moins une période complète.

4. Segment de piston (1) selon une des revendications 1 à 3, dans lequel
- la variation de la largeur (b₁, b₂) et/ou la position du centre de la surface de roulement (2) par rapport à a butée annulaire (3) du segment de piston (1) est asymétrique ; et/ou
- la variation de l'angle (α₁, α₂) entre la surface de roulement (2) et au moins un flanc par rapport à la butée annulaire (3) du segment de piston (1) est asymétrique ; et/ou
- la variation du rayon (r₁, r₂) du profilage bombé par rapport à la butée annulaire (3) du segment de piston (1) est asymétrique.

5. Segment de piston (1) selon une des revendications précédentes, dans lequel un bord de la surface de roulement (2) s'étend parallèlement au flanc voisin.

6. Segment de piston (1) selon une des revendications 1 à 4, dans lequel les deux bords de la surface de roulement (2) présentent respectivement des points de sommet (4), sur lesquels la distance axiale par rapport au flanc voisin présente un minimum, et dans lequel les points de sommet (4) sont disposés dans la direction circonférentielle en alternance sur respectivement un des bords opposés de la surface de roulement (2).

7. Segment de piston (1) selon la revendication 6, dans lequel la largeur axiale (b₁, b₂) présente un maximum sur les points de sommet (4).

8. Segment de piton (1) selon une des revendications précédentes, dans lequel la largeur axiale minimale de la surface de roulement (2) correspond à au moins 20 % de la largeur maximale.

9. Segment de piston (1) selon une des revendications précédentes, dans lequel la largeur axiale (b₁, b₂) d la surface de roulement (2) est comprise entre 0,1 et 0,3 cm, de préférence entre 0,2 et 1,5 cm.

10. Segment de piston (1) selon une des revendications précédentes, dans lequel la largeur axiale (b₁, b₂) de la surface de roulement (2) est comprise entre 5 % et 50 % de la largeur axiale du segment de piston (1).

11. Segment de piston (1) selon la revendication 1, dans lequel la variation de la largeur (b₁, b₂) ou la variation de l'angle (α₁, α₂) ou la variation du rayon (r₁, r₂) est une variation, sont les flancs montants, resp. descendants dans le même sens de déplacement montent/descendent plus fortement que dans sens de déplacement opposé.
